# EUROPEAN PATENT APPLICATION

(11) **EP 4 822 073 A1**
(43) Date of publication of application: **14.10.2026**
(21) Application number: 25183258.0
(22) Date of filing: 17.06.2025
(51) Int. Cl.: D04H 1/728, D04H 1/542, D04H 1/558, B32B 5/26, D01D 5/00

(54) **METHOD AND SYSTEM FOR PREPARING ELECTROSPUN COMPOSITE MEMBRANE**

(30) Priority: 09.04.2025 CN 202510439684
(71) Applicant: Formosa Taffeta Co.,Ltd., Touliu 640402 (TW); Taiwan Textile Research Institute, New Taipei City 23674 (TW)
(72) Inventor: LIU, Fang-Jong, 640402 Touliu (TW); CHANG, Feng-Chang, 640402 Touliu (TW); LIN, Yu-Chen, 640402 Touliu (TW); YE, Zi-Jun, 640402 Touliu (TW); CHOU, Hsin-Ying, 23674 New Taipei City (TW); CHANG, Haw-Jer, 23674 New Taipei City (TW); LEE, Tza-Wei, 23674 New Taipei City (TW)
(74) Representative: Prüfer & Partner mbB Patentanwälte · Rechtsanwälte

(57) **Abstract**

A method and a system for preparing an electrospun composite membrane are provided. The method includes fixing a first base fabric to a conveying device; driving the first base fabric by the conveying device to pass through a first electrospinning device to form a first adhesive fiber layer on one surface of the first base fabric; driving the first base fabric with the first adhesive fiber layer by the conveying device to pass through a second electrospinning device to form a first functional fiber layer on the first adhesive fiber layer of the first base fabric; and driving the first base fabric with the first adhesive fiber layer and the first functional fiber layer by the conveying device to pass through a hot pressing machine, so that the first base fabric with the first adhesive fiber layer and first functional fiber layer is hot-pressed to form the electrospun composite membrane.

## Description

### FIELD OF THE INVENTION

The present disclosure relates to the technical field of electro spinning, and, in particular, to a one-step continuous method for preparing an electrospun composite membrane.

### DESCRIPTION OF THE RELATED ART

Electrospinning is a technology that uses a high-voltage electrostatic field to extract ultra-fine fibers from a solution. In this way, polymer nanofibers are prepared, which are often used in textile industry. For example, in CN104532482A, a needleless electrospinning technology is used to produce polymer nanofibers rapidly and continuously on a large scale, thereby providing a single-layer nonwoven fabric of electrospun nanofibers.

This electrospinning technology can also be used to prepare composite fabrics. For example, in TW202428958A, an electrospun membrane is formed on the surface of a melt-blown adhesive membrane by an electrospinning process, and then the melt-blown adhesive membrane with the electrospun membrane is directly hot pressed onto the surface of a base fabric, to form a composite fabric. However, the entire composite fabric produced by forming a laminated membrane by common melt blowing, coating and point bonding, and covering the laminated membrane on the base fabric by hot pressing, tends to have insufficient air permeability.

Moreover, the current technology for preparing composite fabrics by electrospinning usually involves a multi-stop process. For example, the preparation method of the electrospun membrane and the process of attaching the electrospun membrane to the base fabric can be carried out in different factories or process systems, causing the waste of time and raw materials. Consequently, the overall process cost cannot be reduced.

### SUMMARY OF THE INVENTION

The present disclosure aims to provide a method for preparing an electrospun composite membrane by a one-stop process. An adhesive layer and a functional fiber layer are formed on a base fabric by electrostatic spinning using a continuous conveyor belt. The entire electrospun composite membrane thus prepared can maintain the air permeability, and the process cost is reduced.

The present disclosure provides a method for preparing an electrospun composite membrane, which includes:
fixing a first base fabric to a conveying device;
driving the first base fabric by the conveying device to pass through a first electrospinning device, so as to form a first adhesive fiber layer on one surface of the first base fabric;
driving the first base fabric with the first adhesive fiber layer by the conveying device to pass through a second electrospinning device, so as to form a first functional fiber layer on the first adhesive fiber layer of the first base fabric; and
driving the first base fabric with the first adhesive fiber layer and the first functional fiber layer by the conveying device to pass through a hot pressing machine, so that the first base fabric with the first adhesive fiber layer and the first functional fiber layer is hot-pressed to form the electrospun composite membrane.

In the present disclosure, before the first base fabric with the first adhesive fiber layer and the first functional fiber layer is passed through the hot pressing machine, the method further includes driving the first base fabric with the first adhesive fiber layer and the first functional fiber layer by the conveying device to pass through a hot oven; driving the first base fabric with the first adhesive fiber layer and the first functional fiber layer by the conveying device to pass through a third electrospinning device, so as to form a second adhesive fiber layer on the first functional fiber layer; and applying the second base fabric to the second adhesive fiber layer, and passing through the hot pressing machine, to form the electrospun composite membrane.

The present disclosure further provides a system for preparing an electrospun composite membrane, which includes:
a conveying device, including an input end and an output end;
a first electrospinning device, arranged between the input end and the output end of the conveying device and including an adhesive accommodating component;
a second electrospinning device, arranged between the first electrospinning device and the output end of the conveying device and including a functional solution accommodating component; and
a hot pressing machine, arranged between the second electrospinning device and the output end of the conveying device.

In the present disclosure, the system for preparing an electrospun composite membrane further includes a hot oven, a third electrospinning device, and a fabric input device. The hot oven is arranged between the second electrospinning device and the hot pressing machine; the third electrospinning device is arranged between the hot oven and the hot pressing machine; and the fabric input device is arranged between the third electrospinning device and the hot pressing machine.

In the present disclosure, a temperature in the hot oven is higher than the melting point of the material of the first adhesive fiber layer, and lower than the melting point of the material of the first functional fiber layer.

In the present disclosure, a temperature in the hot oven is about 60°C to about 200°C.

In the present disclosure, a temperature in the hot pressing machine is higher than a melting point of a material of the first adhesive fiber layer, and lower than a melting point of a material of the first functional fiber layer.

In the present disclosure, a hot pressing temperature in the hot pressing machine is about 80°C to about 300°C.

In the present disclosure, the first electrospinning device, the second electrospinning device, and the third electrospinning device are a needleless electrospinning device.

In the present disclosure, an average fiber fineness of each of the first adhesive fiber layer and the second adhesive fiber layer is equal to or greater than an average fiber fineness of the first functional fiber layer; and a basis weight of each of the first adhesive fiber layer and the second adhesive fiber layer is equal to or less than a basis weight of the first functional fiber layer.

In the present disclosure, each of the first adhesive fiber layer and the second adhesive fiber layer has an average fiber fineness of about 200 nm to about 700 nm and a basis weight of about 1 g/M² to about 20 g/M².

In the present disclosure, the first functional fiber layer has an average fiber fineness of about 80 nm to about 500 nm and a basis weight of about 1 g/M² to about 20 g/M².

In the present disclosure, the first functional fiber layer includes one or more additives selected from a water repellent agent, an antibacterial agent, a deodorizer, a mite-repellent agent and a coloring agent.

The present disclosure provides a one-stop method and system for preparing an electrospun composite membrane, so that the electrospun composite membrane can be prepared in the same process system, without being transported to other places for different processes and processing, thus saving the time and cost of transportation. Furthermore, the method of the electrospun composite membrane is usually carried out at a temperature higher than room temperature. If the composite membrane is prepared by a multi-stop system, the base fabric may undergo a heating procedure at each stop. However, as the preparation of the electrospun composite membrane is completed in the one-stop system provided in the present disclosure, the base fabric can be maintained at a temperature higher than room temperature without undergoing multiple heating processes, so as to reduce energy consumption. Moreover, in the present disclosure, the adhesive fiber layer can be formed by electrostatic spinning, so that both the adhesive fiber layer and the functional fiber layer on the base fabric both have air permeability. Accordingly, the air permeability of the entire electrospun composite membrane can be maintained while the process cost is reduced.

### BRIEF DESCRIPTION OF THE DRAWINGS

FIG. 1 is a schematic view of a system for preparing an electrospun composite membrane in accordance with some embodiments of the present disclosure.
FIG. 2 is an exploded perspective view of an electrospun composite membrane in accordance with some embodiments of the present disclosure.
FIG. 3 is a schematic view of a system for preparing an electrospun composite membrane in accordance with some another embodiments of the present disclosure.
FIG. 4 is an exploded perspective view of an electrospun composite membrane in accordance with some another embodiments of the present disclosure.
FIG. 5 is a scanning electron microscopy (SEM) image of a first adhesive fiber layer in an electrospun composite membrane in accordance with some embodiments of the present disclosure (at a magnification of 2,500X).

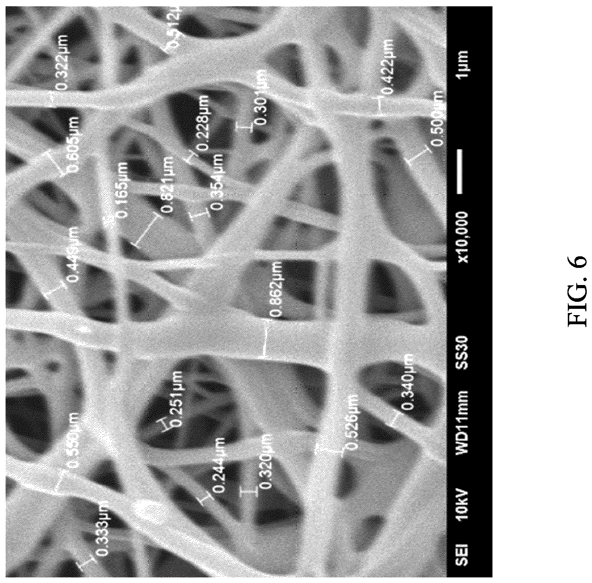

FIG. 6 is a scanning electron microscopy (SEM) image of a first adhesive fiber layer in an electrospun composite membrane in accordance with some embodiments of the present disclosure (at a magnification of 10,000X).
FIG. 7 is a scanning electron microscopy (SEM) image of a first functional layer in an electrospun composite membrane in accordance with some embodiments of the present disclosure (at a magnification of 2,500X).
FIG. 8 is a scanning electron microscopy (SEM) image of an electrospun composite membrane in accordance with some embodiments of the present disclosure (at a magnification of 2,500X).

### DETAILED DESCRIPTION OF THE DISCLOSURE

The present disclosure is more comprehensible from this detailed description and the examples included herein. Numerous specific details are set forth to provide a thorough understanding of the examples described herein. However, it can be understood by those skilled in the art that the examples described herein may be practiced without these specific details. Additionally, the description herein shall not to be regarded as a limitation on the scope of the present disclosure.

Unless otherwise specified herein, in this specification (especially in the scope of claims described hereinafter), the terms "a", "the" and similar terms used shall be understood to include both singular and plural forms. In addition, for the sake of clarity, the dimensions of various components and regions may be exaggerated in the drawings, but not drawn to actual scale.

It should be understood that any numerical range quoted in this specification is intended to include all subranges included therein. For example, the range from "1 to 10" includes all subranges between the stated minimum value of 1 and the stated maximum value of 10 (such as from 2 to 8, 3 to 6 or 4 to 9, etc.) and includes the two values, that is, the ranges including the minimum value equal to or greater than 1 and the maximum value equal to or less than 10. Because the disclosed numerical ranges are continuous, they include every numerical value between the minimum value and the maximum value. Unless otherwise specified, all numerical ranges indicated in this specification are approximate values.

Additionally, herein, it is assumed that all numerical values are modified by the term "about", which means the numerical changes in measurement and operation and caused by the accuracy of the measuring equipment used, as expected by those skilled in the art.

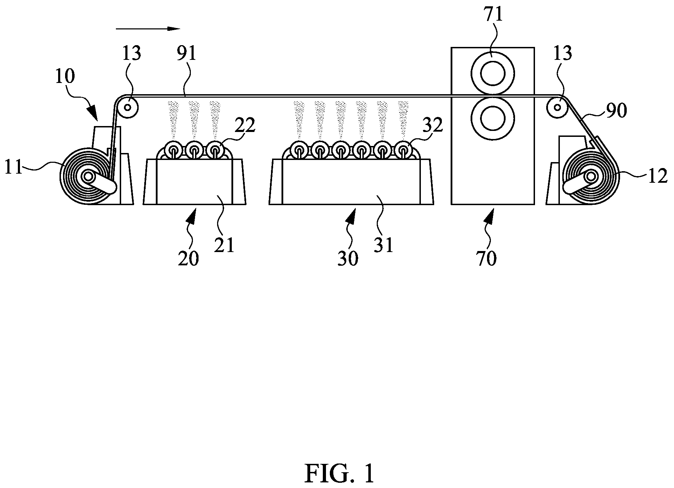

As shown in FIG. 1, a system for preparing an electrospun composite membrane according to the present disclosure includes:
a conveying device 10, including an input end 11 with a first base fabric reel, an output end 12 with a winding roller, and optionally one or more supporting rolls 13 arranged between the input end 11 and the output end 12, where the conveying device 10 may be driven by a motor, the first base fabric reel holds a first base fabric 91 to be treated, the first base fabric 91 is conveyed into the system, and a treated first base fabric 91 is wound onto the winding roller 12;
a first electrospinning device 20, arranged between the input end 11 and the output end 12 of the conveying device 10, and including an adhesive accommodating component 21 and a plurality of nozzles 22 in communication with the adhesive accommodating component 21, where the adhesive accommodating component 21 contains an adhesive solution, so that when the first electrospinning device 20 operates, the adhesive can be sprayed from the nozzles 22 towards the first base fabric 91;
a second electrospinning device 30, arranged between the first electrospinning device 20 and the output end 12 of the conveying device 10, and including a functional solution accommodating component 31 and a plurality of nozzles 32 in communication with the functional solution accommodating component 31, where the functional solution accommodating component 31 contains a functional solution, so that when the second electrospinning device 30 operates, the functional solution can be sprayed from the nozzles 32 towards the first base fabric 91; and
a hot pressing machine 70, arranged between the second electrospinning device 30 and the output end 12 of the conveying device 10, where the hot pressing machine 70 includes at least one set of hot pressing rolls 71 assembled in parallel up and down, so that when the hot pressing machine 70 operates, the first base fabric 91 can pass through the hot pressing rolls 71.

The present disclosure provides a method for preparing an electrospun composite membrane used with the system for preparing an electrospun composite membrane. Therefore, the following description will be made with reference to FIG. 1. However, the method for preparing an electrospun composite membrane provided in the present disclosure is not limited to use with the system for preparing an electrospun composite membrane. The method still belongs to the scope of protection of the present disclosure, as long as it conforms to the spirit and scope of the method disclosed in the present disclosure, so the scope of protection of the present disclosure shall be defined by the appended claims.

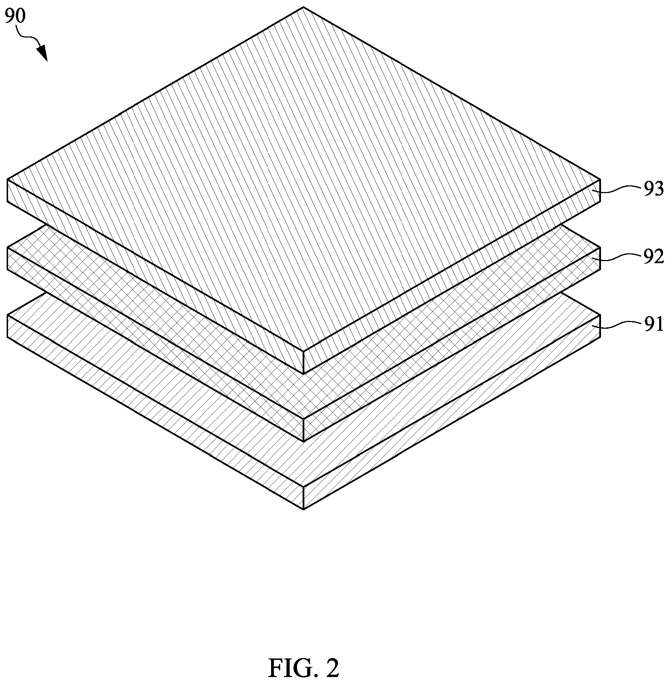

Referring to FIG. 1 and FIG. 2, the method for preparing an electrospun composite membrane provided in the present disclosure includes the following steps:
fixing the first base fabric 91 onto the conveying device 10, so that the first base fabric 91 travels from the first base fabric reel at the input end 11 towards the winding roller at the output end 12 (as indicated by the arrow in FIG. 1);
driving the first base fabric 91 by the conveying device 10 to pass through the first electrospinning device 20, so as to form the first adhesive fiber layer 92 on one surface of the first base fabric 91;
driving the first base fabric 91 with the first adhesive fiber layer 92 (not shown in FIG. 1) by the conveying device 10 to pass through the second electrospinning device 30, so as to form the first functional fiber layer 93 (not shown in FIG. 1) on the first adhesive fiber layer 92 of the first base fabric 91;
driving the first base fabric 91 with the first adhesive fiber layer 92 and the first functional fiber layer 93 by the conveying device 10 to pass through the hot pressing machine 70, so that the first base fabric 91 with the first adhesive fiber layer 92 and the first functional fiber layer 93 is hot-pressed to form the electrospun composite membrane 90. As shown in FIG. 2, the electrospun composite membrane 90 may have a three-layer structure, including the first base fabric 91, the first adhesive fiber layer 92, and the first functional fiber layer 93, where the first base fabric 91 and the first functional fiber layer 93 are bonded by the first adhesive fiber layer 92.

The first base fabric 91 may be a surface cloth, which may be woven or non-woven, and the material may include, but is not limited to, polyester, nylon, polypropylene, polyvinylpyrrolidone, or a combination thereof.

### [First electrospinning device]

The first electrospinning device 20 may be a high-voltage electrostatic needle spinning device or a needleless electrospinning device. In some embodiments, the first electrospinning device 20 may be a needleless electrospinning device, which is an open system with a high spinning speed, and can be used for mass production. Referring to FIG. 1, the first base fabric 91 is located above the nozzles 22 of the first electrospinning device 20 when passing through the first electrospinning device 20. The nozzles 22 of the first electrospinning device 20 sprays an adhesive to the surface of the first base fabric 91 above. By means of a high-voltage electric field (the high-voltage power supply voltage is controlled between about 50 kV and about 120 kV), the solvent in the adhesive is volatilized to form the first adhesive fiber layer 92 on the first base fabric 91, which has an average fiber fineness of about 200 nm to about 700 nm and a basis weight of about 1 g/M² to about 20 g/M².

In some embodiments, the first adhesive fiber layer 92 may have an average fiber fineness of about 300 nm to about 450 nm. In some embodiments, the first adhesive fiber layer 92 may have an average fiber fineness of about 350 nm to about 400 nm, such that the first adhesive fiber layer 92 and the final electrospun composite membrane 90 have superior air permeability and flexibility. In some embodiments, the first adhesive fiber layer 92 may have a basis weight of about 2 g/M² to about 15 g/M². In some embodiments, the first adhesive fiber layer 92 may have a basis weight of about 3 g/M² to about 10 g/M². By adjusting the fiber fineness of the nanofibers in the first adhesive fiber layer 92, the first adhesive fiber layer 92 can have an appropriate pore size, thus having high air permeability and high water resistance, and providing sufficient adhesion between the first base fabric 91 and the first functional fiber layer 93. In the present disclosure, the average fiber fineness of the nanofibers in the first adhesive fiber layer 92 is about 200 nm to about 700 nm, so that the first adhesive fiber layer 92 can not only provide a high water resistance, but also maintain a good adhesiveness.

Because the first base fabric 91 moves forward throughout the whole system at a steady speed, the number and density of the nozzles 22 in the first electrospinning device 20 can be adjusted according to the basis weight of the first adhesive fiber layer 92 to be obtained.

The adhesive accommodating component 21 can be a tank, a pipeline or other components that can accommodate the adhesive and deliver the adhesive to the nozzles 22 of the first electrospinning device 20. The material of the adhesive can be selected according to the materials of the first base fabric 91 and the first functional fiber layer 93. In some embodiments, the materials of the first functional fiber layer 93 and the first base fabric 91 can be nylon, and the adhesive can also be a nylon-based adhesive, so that the electrospun composite membrane 90 has material homogeneity as a whole, which is beneficial to the hot pressing process in a specific temperature range. Additionally, when respective materials of the first base fabric 91, the first adhesive fiber layer 92 and the first functional fiber layer 93 are all nylon, because the first base fabric 91, the first adhesive fiber layer 92 and the first functional fiber layer 93 can be melted at the interface, the structural strength (tensile strength) and interlayer strength (peeling strength) of the electrospun composite membrane 90 in the present disclosure can be further improved.

In some embodiments, the adhesive may be a nylon-based adhesive, and the solvent may be an alcohol solvent, so that the adhesive has the advantages of volatility, low toxicity and low corrosiveness, and is environmentally friendly. The concentration of the adhesive is about 10 wt% to about 20 wt%. In some other embodiments, the adhesive may also include polyurethane (PU), polymethyl methacrylate (PMMA), and polyvinyl acetate (PVAC), etc. Dimethyl acetamide (DMAc) can be used as a solvent for polymethyl methacrylate and water can be used as a solvent for polyvinyl acetate.

### [Second electrospinning device]

The second electrospinning device 30 may be a high-voltage electrostatic needle spinning device or a needleless electrospinning device. In some embodiments, the second electrospinning device 30 may be a needleless electrospinning device. Referring to FIG. 1, the first base fabric 91 with the first adhesive fiber layer 92 is located above the nozzles 32 of the second electrospinning device 30 when passing through the second electrospinning device 30. The nozzles 32 of the second electrospinning device 30 sprays a functional solution to the first adhesive fiber layer 92 on the first base fabric 91 above. By means of a high-voltage electric field (the high-voltage power supply voltage is controlled between about 50 kV and about 120 kV), the solvent in the functional solution is volatilized to form the first functional fiber layer 93 on the first adhesive fiber layer 92 of the first base fabric 91, which has an average fiber fineness of about 80 nm to about 500 nm and a basis weight of about 1 g/M² to about 20 g/M².

In some embodiments, the first functional fiber layer 93 may have an average fiber fineness of about 100 nm to about 300 nm, In some embodiments, the first functional fiber layer 93 may have an average fiber fineness of about 150 nm to about 250 nm, such that the first functional fiber layer 93 and the final electrospun composite membrane 90 have superior air permeability and flexibility. In some embodiments, the first functional fiber layer 93 may have a basis weight of about 2 g/M² to about 15 g/M². In some embodiments, the first functional fiber layer 93 may have a basis weight of about 3 g/M² to about 10 g/M². By adjusting the fiber fineness of the nanofibers in the first functional fiber layer 93, the first functional fiber layer 93 can have an appropriate pore size, thus having high air permeability and high water resistance. In the present disclosure, the average fiber fineness of the nanofibers in the first functional fiber layer 93 is about 80 nm to about 500 nm, so that the first functional fiber layer 93 can provide a high water resistance. Moreover, if the nanofibers are pressed more tightly for the purpose of reducing the pore size, although the water resistance can be improved, the air permeability of the first functional fiber layer 93 can be reduced. In some embodiments, the average pore size of the first functional fiber layer 93 is about 0.5 µm to about 5.5 µm. In some embodiments, the average pore size of the first functional fiber layer 93 is about 0.75 µm to about 4 µm. In some embodiments, the average pore size of the first functional fiber layer 93 is about 0.8 µm to about 2 µm.

Because the first base fabric 91 travels in the whole system at a steady speed, the number and density of the nozzles 32 in the second electrospinning device 30 can be adjusted according to the basis weight of the first functional fiber layer 93 to be obtained.

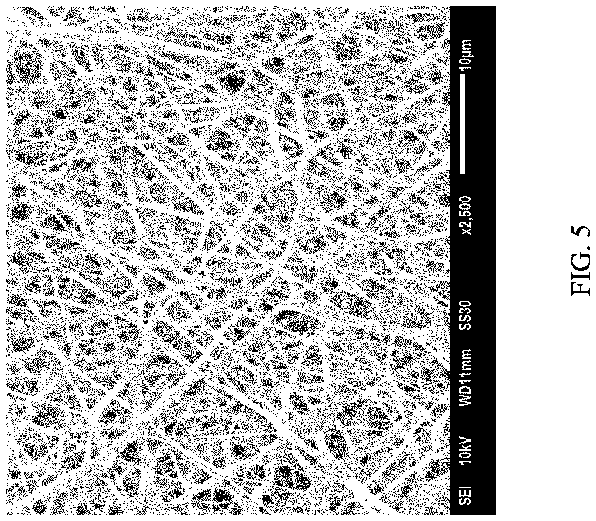

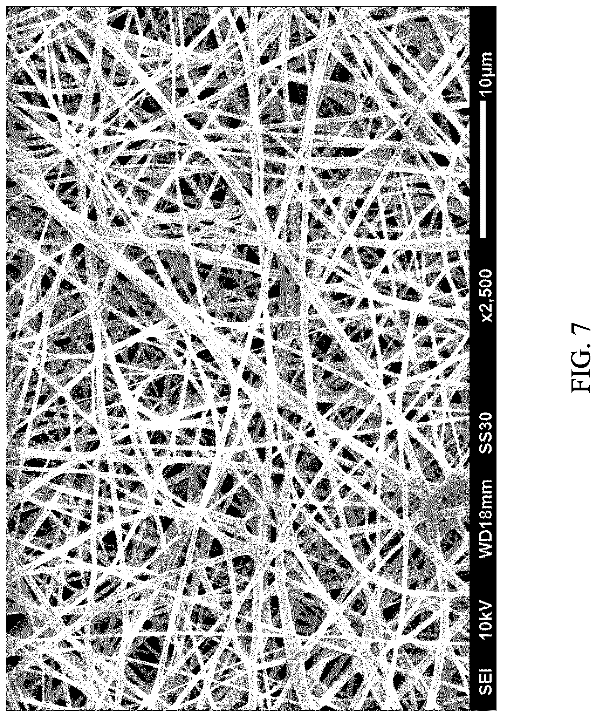

In some embodiments, the average fiber fineness of the first functional fiber layer 93 (see the electron microscopy image shown in FIG. 7) may be equal to or less than the average fiber fineness of the first adhesive fiber layer 92 (see the electron microscopy image shown in FIG. 5). In some embodiments, the ratio of the average fiber fineness of the first functional fiber layer 93 to the average fiber fineness of the first adhesive fiber layer 92 is from about 1: 1 to about 1: 5. Alternatively, the ratio of the average fiber fineness of the first functional fiber layer 93 to the average fiber fineness of the first adhesive fiber layer 92 is from about 1: 1.5 to about 1: 3. In some embodiments, the basis weight of the first functional fiber layer 93 is equal to or greater than the basis weight of the first adhesive fiber layer 92. In some embodiments, the ratio of the basis weight of the first functional fiber layer 93 to the basis weight of the first adhesive fiber layer 92 is from about 1: 1 to about 10: 1. Alternatively, the ratio of the basis weight of the first functional fiber layer 93 to the basis weight of the first adhesive fiber layer 92 is from about 1.5: 1 to about 7: 1. Alternatively, the ratio of the basis weight of the first functional fiber layer 93 to the basis weight of the first adhesive fiber layer 92 is from about 3: 1 to about 5: 1.

The functional solution accommodating component 31 can be a tank, a pipeline or other components that can accommodate the functional solution and deliver the functional solution to the nozzles 32 of the second electrospinning device 30. The functional solution can be selected according to the properties of the electrospun composite membrane 90 desired. In some embodiments, the functional solution may be a nylon-based solution, and the solvent may be an alcohol solvent. The concentration of the functional solution is from about 5 wt% to about 15 wt%. The functional solution may also be polyacrylonitrile (PAN), polyvinyl alcohol (PVA), polyisopropylacrylamide or other materials commonly used for preparing an electrospun composite membrane. In addition, the functional solution may further include one or more additives to endow the first functional fiber layer 93 obtained from the functional solution with different properties, such as a water repellent agent, an antibacterial agent, a deodorizer, a mite-repellent agent, a coloring agent (e.g., a dye or a pigment), and the like.

In some embodiments, the functional solution may further include a coloring agent, such as a dye or a pigment, to provide the first functional fiber layer 93 a variety of color choices, and create rich visual effects at dark and light levels by adjusting the amount of the coloring agent (such as dyes, or pigments) added, so as to enhance the aesthetics and application flexibility of the first functional fiber layer 93. For example, if the concentration of the coloring agent varies from small to large, the color saturation that the first functional fiber layer 93 can exhibit can vary from light to dark. The type and concentration of the coloring agent can be adjusted as required.

In some embodiments, the functional solution includes a nylon copolymer and an alcohol as a solvent. The nylon copolymer and the alcohol can make the functional solution have superior spinnability. Additional additives may be added to further make the nanofibers in the first functional fiber layer 93 have high fiber strength and high fiber elongation, and impart the electrospun composite membrane 90 high hydrophobicity. In some embodiments, the nylon copolymer may be a copolymer of copolyamide and alkoxy-modified nylon 46/66 copolymer, to promote the dissolution in an alcohol, thus improving the spinnability of the electrospinning solution.

### [Hot pressing machine]

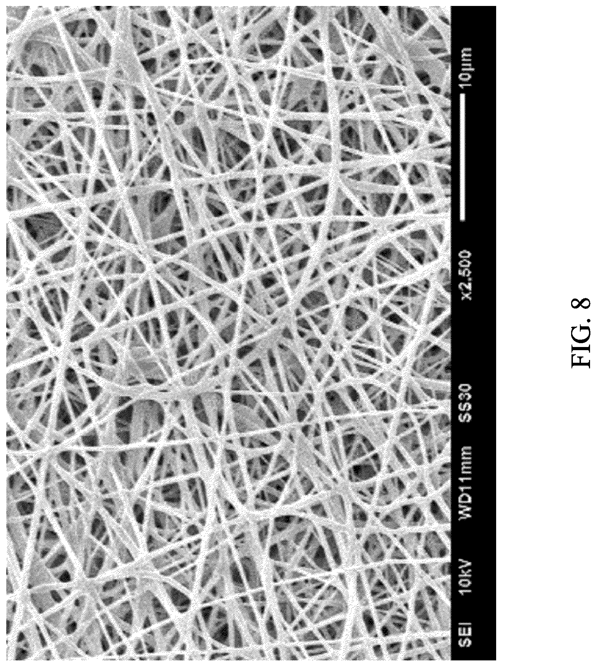

The temperature in the hot pressing machine 70 is higher than the melting point of the material of the first adhesive fiber layer 92, and lower than the melting point of the material of the first functional fiber layer 93. In some embodiments, a hot pressing temperature in the hot pressing machine 70 is about 80°C to about 300°C. In some embodiments, the hot pressing temperature in the hot pressing machine 70 is about 90°C to about 260°C. In some embodiments, the hot pressing temperature in the hot pressing machine 70 is about 100°C to about 200°C. During the hot pressing process, the first adhesive fiber layer 92 disposed between the first functional fiber layer 93 and the first base fabric 91 can be partially melted, but the first functional fiber layer 93 is maintained in a non-melted state, so as to bond the first functional fiber layer 93 and the first base fabric 91 to each other. Because the first adhesive fiber layer 92 can be melted at respective interfaces with the first functional fiber layer 93 and the first base fabric 91, the first adhesive fiber layer 92 can panetrate into gaps between the nanofibers in the first functional fiber layer 93 at the interface with the first functional fiber layer 93, and the melted first adhesive fiber layer 92 can panetrate into gaps between the fibers of the first base fabric 91 from the interface with the first base fabric 91, thus forming tight and firm adhesion. As a result, the electrospun composite membrane 90 (see the electron microscopy image shown in FIG. 8) is obtained.

The hot pressing machine 70 includes at least one set of hot pressing rolls 71 assembled in parallel up and down. The hot pressing roll 71 may be an embossing roll (that is, embossing roll bonding ) or a smooth roll (that is, smooth roll bonding). In some embodiments, the roll speed of the hot pressing roll 71 may be about 0.1 m/min to about 10 m/min. In some embodiments, the roll speed of the hot pressing roll 71 may be about 0.5 m/min to about 6 m/min. In some embodiments, the roll speed of the hot pressing roll 71 may be about 1 m/min to about 3.5 m/min.

The system for preparing an electrospun composite membrane in the present disclosure may further include various devices according to the required properties of the electrospun composite membrane.

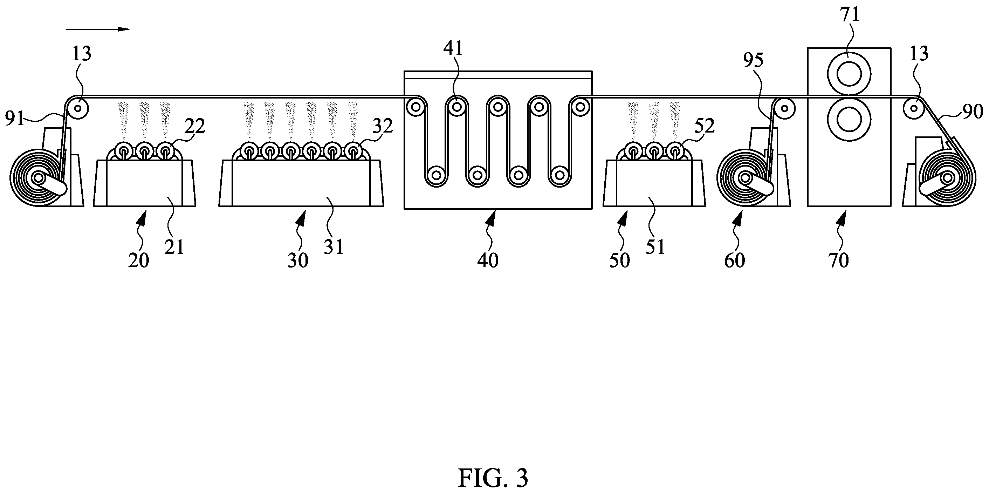

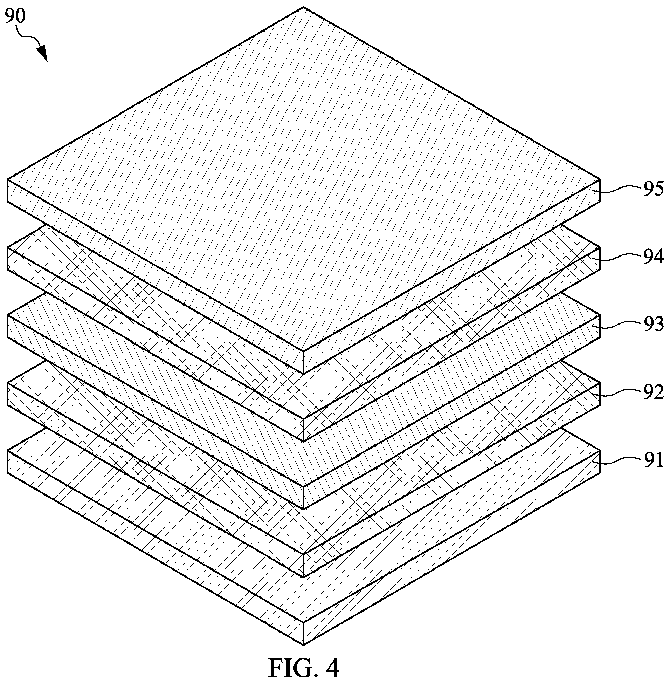

As shown in FIGS. 3 and 4, the system for preparing an electrospun composite membrane according to the present disclosure may include the conveying device10, the first electrospinning device 20, the second electrospinning device 30 and the hot pressing machine70 as described above, which are not detailed here again. The system further includes:
a hot oven 40, arranged between the second electrospinning device 30 and the hot pressing machine70, and having a plurality of transfer rolls 41, where because the first base fabric 91 travels in the whole system at a steady speed, the time for the first base fabric 91 to pass through the hot oven 40 can be controlled by the number and position of the transfer roll 41 to ensure that the first adhesive fiber layer 92 can be melted and panetrated into the first base fabric 91 and the first functional fiber layer 93, thereby ensuring the bonding effect;
a third electrospinning device 50, arranged between the hot oven 40 and the hot pressing machine 70, and including an adhesive accommodating component 51 and a plurality of nozzles 52 in communication with the adhesive accommodating component 51, where the adhesive accommodating component 51 contains an adhesive solution, so that when the third electrospinning device 50 operates, the adhesive can be ejected from the nozzles 52 towards the first base fabric 91; the adhesive in the third electrospinning device 50 can be the same as or different from the adhesive in the first electrospinning device 20, and the adhesive in the third electrospinning device 50 may be selected according to the materials of the first functional fiber layer 93 and a second base fabric 95 provided later; and
a fabric input device 60, arranged between the third electrospinning device 50 and the hot pressing machine70, and configured to input the second base fabric 95 into the system, and where the second base fabric 95 travels with the first base fabric 91 and various layers thereon to and is pressed by the hot pressing machine 70.

As shown in FIGS. 3 and 4, after the first adhesive fiber layer 92 and the first functional fiber layer 93 are formed on a surface of the first base fabric 91 and before they are passed through the hot pressing machine, the method for preparing an electrospun composite membrane provided in the present disclosure further includes the following steps:
driving the first base fabric 91 with the first adhesive fiber layer 92 and the first functional fiber layer 93 by the conveying device 10 to pass through the hot oven 40, in which the hot oven 40 has a plurality of transfer rolls 41, and the time for the first base fabric 91 to pass through the hot oven 40 can be controlled by the adjustment of the number and position of the transfer rolls 41; the temperature in the hot oven 40 is higher than the melting point of the material of the first adhesive fiber layer 92, and lower than the melting point of the material of the first functional fiber layer 93; for example, the temperature in the hot oven is about 60°C to about 200°C; in some embodiments, the temperature in the hot oven is about 80°C to about 180°C; and in some embodiments, the temperature in the hot oven is about 100°C to about 150°C;
driving the first base fabric 91 with the first adhesive fiber layer 92 and the first functional fiber layer 93 by the conveying device 10 to pass through the third electrospinning device 50, so as to form a second adhesive fiber layer 94 (not shown in FIG. 3) on the first functional fiber layer 93, in which the elements and their configurations (including the composition of the adhesive) in the third electrospinning device 50 are substantially the same as those in the first electrospinning device 20, or can be adjusted as desired;
applying the second base fabric 95 to the second adhesive fiber layer 94 to form the electrospun composite membrane 90 after passing through the hot pressing machine 70. As shown in FIG. 4, the electrospun composite membrane 90 has a five-layer structure, including the first base fabric 91, the first adhesive fiber layer 92, the first functional fiber layer 93, the second adhesive fiber layer 94, and the second base fabric 95. The first base fabric 91 and the first functional fiber layer 93 are bonded by the first adhesive fiber layer 92, and the second base fabric 95 and the first functional fiber layer 93 are bonded by the second adhesive fiber layer 94.

In some embodiments, the system and method for preparing an electrospun composite membrane according to the present disclosure include the use of more electrospinning devices, to form an electrospun composite membrane 90 including a structure of more layers. For example, more adhesive fiber layers and/or more functional fiber layers of, for example, water repellent fibers, antibacterial fibers, anti-odor fibers, anti-mite fibers, fibers with different colors, anti-UV fibers, and far infrared fibers, etc. In some embodiments, before the first adhesive fiber layer 92 is formed, a first base fabric pretreatment device may be arranged, to pretreat any surface of the first base fabric 91. However, the embodiments disclosed above do not limit the present disclosure in any way.

### Examples

### Test items and instruments

Basis weight of fibers: The fabric weight per unit area was determined following ASTM D3776 standard.

Average pore size: The average pore size was determined using a capillary flow porometer from PMI.

Air permeability: The air permeability was determined following ASTM D737 standard.

Water vapor permeability: The water vapor permeability was determined following JIS L 1099 B1 standard.

Hydrostatic pressure test: Following JIS L1092-5.1-B standard is followed to deteremine the force exerted by a column of water (how many millimetre) per unit area. A larger value indicates a higher hydrostatic pressure tolerance (water resistance).

Peeling strength: Following ISO 2411 standard, the coating adhesion of rubber and plastic coated fabrics was measured.

Wash fastness test: AATCC135-2018 standard: Standard Test Method for Dimensional Changes of Fabrics after Home Laundering was followed. Water washing parameters: Normal mode/20 times (with laundry powder/in laundry bag). According to the washing mode in AATCC 135-2018, the value is tested to be 660 ± 15 RPM in normal mode.

Water spray test: AATCC35 standard is followed. The principle is to spray water onto the surface of the sample for 5 min, where a weighed absorbent paper was placed at the back of the sample. Then the sprayed absorbent paper was weighed to determine the water permeability. In this test, the fabric was tilted at an angle of 45° to simulate the dripping of rain. The test was continued for 5 min. The operation parameters were controlled to be 1 gram x 2 feet x 5 min (1g, 5 min @ 2ft).

Water vapor resistance: CNS 15102 L3256 standard Textiles - Physiological Effects - Measurement of Thermal and Water-Vapor Resistance under Steady-State Conditions was followed.

### Example 1

In Example 1, a Nylon-Elastane plain woven fabric was fixed onto a conveying device, and driven by the conveying device to pass through a first electrospinning device having a voltage controlled to about 80 kV. The first electrospinning device sprayed an ethanol solution containing bio-based Nylon that was used as an adhesive (the concentration was about 15 wt%) toward the Nylon-Elastane plain woven fabric, to form a first adhesive fiber layer on the surface of the Nylon-Elastane plain woven fabric, which had an average fiber fineness of about 377 nm and a basis weight of about 2.5 g/M². The Nylon-Elastane plain woven fabric with the first adhesive fiber layer was then driven by the conveying device to pass through a second electrospinning device having a voltage controlled to about 80 kV. The second electrospinning device sprayed an ethanol solution containing bio-based Nylon that was used as a functional solution (the concentration was about 7 wt%) toward the first adhesive fiber layer, to form a first functional fiber layer on the surface of the first adhesive fiber layer, which had an average fiber fineness of about 276 nm, a basis weight of about 10 g/M², and an average pore size of about 0.8 µm. The Nylon-Elastane plain woven fabric with the first adhesive fiber layer and the first functional fiber layer was further driven by the conveying device to pass through and heated at a temperature of about 135°C in a hot oven, and then pass through a third electrospinning device having a voltage controlled to about 80 kV. The third electrospinning device sprayed an ethanol solution containing bio-based Nylon that was used as an adhesive (the concentration was about 15 wt%) toward the first functional fiber layer, to form a second adhesive fiber layer on the surface of the Nylon-Elastane plain woven fabric, which had an average fiber fineness of about 377 nm and a basis weight of about 2.5 g/M². Then, a Nylon circular knitted fabric was applied to the second adhesive fiber layer, and passed through a hot pressing machine. The multi-layer structure was hot pressed at a hot pressing roll speed of about 1 m/min and a hot pressing temperature of about 100°C, to obtain an electrospun composite membrane of Example 1.

The electrospun composite membrane of Example 1 was subjected to performance tests, including hydrostatic pressure, air permeability, water vapor permeability, peeling strength, water spray, and wash fastness tests. The results show that the electrospun composite membrane of Example 1 has a hydrostatic pressure tolerance of about 10,000 mm H₂O, an air permeability of about 0.7 CFM ( cubic feet per minute (ft³/min)), a water vapor permeability of about 20,000 g/m²*24hr, a peeling strength of about 204 g/cm, and passes the water spray test (the weight difference before and after test with absorbent paper is about 0.1 g) and the wash fastness test (no peeling was observed after washing for 50 times).

### Example 2

In Example 2, a Nylon fabric was fixed onto a conveying device, and driven by the conveying device to pass through a first electrospinning device having a voltage controlled to about 50 kV. The first electrospinning device sprayed an ethanol solution containing bio-based Nylon that was used as an adhesive (the concentration was about 7 wt%) toward the Nylon fabric, to form a first adhesive fiber layer on the surface of the Nylon fabric, which had an average fiber fineness of about 200 nm and a basis weight of about 2 g/M². The Nylon fabric with the first adhesive fiber layer was then driven by the conveying device to pass through a second electrospinning device having a voltage controlled to about 80 kV. The second electrospinning device sprayed an ethanol solution containing bio-based Nylon that was used as a functional solution (the concentration was about 5 wt%) toward the first adhesive fiber layer, to form a first functional fiber layer on the surface of the first adhesive fiber layer, which had an average fiber fineness of about 200 nm, a basis weight of about 3g/M², and an average pore size of about 1.7 µm. The Nylon fabric with the first adhesive fiber layer and the first functional fiber layer was further driven by the conveying device to pass through and heated at a temperature of about 60 °C in a hot oven, and then pass through a third electrospinning device having a voltage controlled to about 50 kV. The third electrospinning device sprayed an ethanol solution containing bio-based Nylon that was used as an adhesive (the concentration was about 7 wt%) toward the first functional fiber layer, to form a second adhesive fiber layer on the surface of the Nylon fabric, which had an average fiber fineness of about 200 nm and a basis weight of about 1.8 g/M². Then, another Nylon fabric was applied to the second adhesive fiber layer, and passed through a hot pressing machine. The multi-layer structure was hot pressed at a hot pressing roll speed of about 6 m/min and a hot pressing temperature of about 80 °C, to obtain an electrospun composite membrane of Example 2.

The electrospun composite membrane of Example 2 was subjected to performance tests, including hydrostatic pressure, air permeability, water vapor permeability, peeling strength, water spray, and wash fastness tests. The results show that the electrospun composite membrane of Example 2 has a hydrostatic pressure tolerance of about 2,000 mm H₂O, an air permeability of about 20 CFM, a water vapor permeability of about 100,000 g/m²*24hr, a peeling strength of about 207 g/cm, and passes the water spray test (the weight difference before and after test with absorbent paper is about 0.1 g) and the wash fastness test (no peeling was observed after washing for 50 times).

### Example 3

In Example 3, a Nylon fabric was fixed onto a conveying device, and driven by the conveying device to pass through a first electrospinning device having a voltage controlled to about 75 kV. The first electrospinning device sprayed an ethanol solution containing bio-based Nylon that was used as an adhesive (the concentration was about 7 wt%) toward the Nylon fabric, to form a first adhesive fiber layer on the surface of the Nylon fabric, which had an average fiber fineness of about 250 nm and a basis weight of about 2.9 g/M². The Nylon fabric with the first adhesive fiber layer was then driven by the conveying device to pass through a second electrospinning device having a voltage controlled to about 75 kV. The second electrospinning device sprayed an ethanol solution containing bio-based Nylon that was used as a functional solution (the concentration was about 5 wt%) toward the first adhesive fiber layer, to form a first functional fiber layer on the surface of the first adhesive fiber layer, which had an average fiber fineness of about 500 nm, a basis weight of about 3 g/M², and an average pore size of about 5.4 µm. The Nylon fabric with the first adhesive fiber layer and the first functional fiber layer was further driven by the conveying device to pass through and heated at a temperature of about 110 °C in a hot oven, and then pass through a third electrospinning device having a voltage controlled to about 75 kV. The third electrospinning device sprayed an ethanol solution containing bio-based Nylon that was used as an adhesive (the concentration was about 7 wt%) toward the first functional fiber layer, to form a second adhesive fiber layer on the surface of the Nylon fabric, which had an average fiber fineness of about 248 nm and a basis weight of about 3.03 g/M². Then, another Nylon fabric was applied to the second adhesive fiber layer, and passed through a hot pressing machine. The multi-layer structure was hot pressed at a hot pressing roll speed of about 3.5 m/min and a hot pressing temperature of about 100 °C, to obtain an electrospun composite membrane of Example 3.

The electrospun composite membrane of Example 3 was subjected to performance tests, including hydrostatic pressure, air permeability, water vapor permeability, peeling strength, water spray, and wash fastness tests. The results show that the electrospun composite membrane of Example 3 has a hydrostatic pressure tolerance of about 1,000 mm H₂O, an air permeability of about 12 CFM, a water vapor permeability of about 120,000 g/m²*24hr, a peeling strength of about 213 g/cm, and passes the water spray test (the weight difference before and after test with absorbent paper is about 0.1 g) and the wash fastness test (no peeling was observed after washing for 50 times).

### Example 4

In Example 4, a Nylon fabric was fixed onto a conveying device, and driven by the conveying device to pass through a first electrospinning device having a voltage controlled to about 75 kV. The first electrospinning device sprayed an ethanol solution containing bio-based Nylon that was used as an adhesive (the concentration was about 7 wt%) toward the Nylon fabric, to form a first adhesive fiber layer on the surface of the Nylon fabric, which had an average fiber fineness of about 250 nm and a basis weight of about 5.2 g/M². The Nylon fabric with the first adhesive fiber layer was then driven by the conveying device to pass through a second electrospinning device having a voltage controlled to about 75 kV. The second electrospinning device sprayed an ethanol solution containing bio-based Nylon that was used as a functional solution (the concentration was about 7 wt%) toward the first adhesive fiber layer, to form a first functional fiber layer on the surface of the first adhesive fiber layer, which had an average fiber fineness of about 273 nm, a basis weight of about 7 g/M², and an average pore size of about 1.08 µm. The Nylon fabric with the first adhesive fiber layer and the first functional fiber layer was further driven by the conveying device to pass through and heated at a temperature of about 110 °C in a hot oven, and then pass through a third electrospinning device having a voltage controlled to about 75 kV. The third electrospinning device sprayed an ethanol solution containing bio-based Nylon that was used as an adhesive (the concentration was about 7 wt%) toward the first functional fiber layer, to form a second adhesive fiber layer on the surface of the Nylon fabric, which had an average fiber fineness of about 252 nm and a basis weight of about 5.1 g/M². Then, another Nylon fabric was applied to the second adhesive fiber layer, and passed through a hot pressing machine. The multi-layer structure was hot pressed at a hot pressing roll speed of about 2 m/min and a hot pressing temperature of about 100 °C, to obtain an electrospun composite membrane of Example 4.

The electrospun composite membrane of Example 4 was subjected to performance tests, including hydrostatic pressure, air permeability, water vapor permeability, peeling strength, water spray, and wash fastness tests. The results show that the electrospun composite membrane of Example 4 has a hydrostatic pressure tolerance of about 5,000 mm H₂O, an air permeability of about 3 CFM, a water vapor permeability of about 70,000 g/m²*24hr, a peeling strength of about 258 g/cm, and passes the water spray test (the weight difference before and after test with absorbent paper is about 0.1 g) and the wash fastness test (no peeling was observed after washing for 50 times).

### Example 5

In Example 5, an ocean-recycled Nylon fabric was fixed onto a conveying device, and driven by the conveying device to pass through a first electrospinning device having a voltage controlled to about 80kV. The first electrospinning device sprayed an ethanol solution containing Nylon that was used as an adhesive (the concentration was about 15 wt%) toward the ocean-recycled Nylon fabric, to form a first adhesive fiber layer on the surface of the ocean-recycled Nylon fabric, which had an average fiber fineness of about 350 nm and a basis weight of about 5.2 g/M². The ocean-recycled Nylon fabric with the first adhesive fiber layer was then driven by the conveying device to pass through a second electrospinning device having a voltage controlled to about 80kV. The second electrospinning device sprayed an ethanol solution containing bio-based Nylon that was used as a functional solution (the concentration was about 7 wt%) toward the first adhesive fiber layer, to form a first functional fiber layer on the surface of the first adhesive fiber layer, which had an average fiber fineness of about 302 nm, a basis weight of about 10 g/M² and an average pore size of about 1.1 µm. The ocean-recycled Nylon fabric with the first adhesive fiber layer and the first functional fiber layer was further driven by the conveying device to pass through and heated at a temperature of about 120°C in a hot oven, and then pass through a third electrospinning device having a voltage controlled to about 80 kV. The third electrospinning device sprayed an ethanol solution containing bio-based Nylon that was used as an adhesive (the concentration was about 15 wt%) toward the first functional fiber layer, to form a second adhesive fiber layer on the surface of the ocean-recycled Nylon fabric, which had an average fiber fineness of about 339 nm and a basis weight of about 4.95 g/M². Then, another ocean-recycled Nylon fabric was applied to the second adhesive fiber layer, and passed through a hot pressing machine. The multi-layer structure was hot pressed at a hot pressing roll speed of about 2 m/min and a hot pressing temperature of about 90°C, to obtain an electrospun composite membrane of Example 5.

The electrospun composite membrane of Example 5 was subjected to performance tests, including hydrostatic pressure, air permeability, water vapor permeability, peeling strength, water spray, and wash fastness tests. The results show that the electrospun composite membrane of Example 5 has a hydrostatic pressure tolerance of about 6,000 mm H₂O, an air permeability of about 2 CFM, a water vapor permeability of about 60,000 g/m²*24hr, a peeling strength of about 261 g/cm, and passes the water spray test (the weight difference before and after test with absorbent paper is about 0.2 g) and the wash fastness test (no peeling was observed after washing for 50 times).

### Example 6

In Example 6, an ocean-recycled Nylon fabric was fixed onto a conveying device, and driven by the conveying device to pass through a first electrospinning device having a voltage controlled to about 80 kV. The first electrospinning device sprayed an ethanol solution containing Nylon that was used as an adhesive (the concentration was about 15 wt%) toward the ocean-recycled Nylon fabric, to form a first adhesive fiber layer on the surface of the ocean-recycled Nylon fabric, which had an average fiber fineness of about 350 nm and a basis weight of about 6.3 g/M². The ocean-recycled Nylon fabric with the first adhesive fiber layer was then driven by the conveying device to pass through a second electrospinning device having a voltage controlled to about 80 kV. The second electrospinning device sprayed an ethanol solution containing bio-based Nylon that was used as a functional solution (the concentration was about 7 wt%) toward the first adhesive fiber layer, to form a first functional fiber layer on the surface of the first adhesive fiber layer, which had an average fiber fineness of about 284 nm, a basis weight of about 11 g/M², and an average pore size of about 0.82 µm. The ocean-recycled Nylon fabric with the first adhesive fiber layer and the first functional fiber layer was further driven by the conveying device to pass through and heated at a temperature of about 120°C in a hot oven, and then pass through a third electrospinning device having a voltage controlled to about 80 kV. The third electrospinning device sprayed an ethanol solution containing bio-based Nylon that was used as an adhesive (the concentration was about 15 wt%) toward the first functional fiber layer, to form a second adhesive fiber layer on the surface of the ocean-recycled Nylon fabric, which had an average fiber fineness of about 352 nm and a basis weight of about 6 g/M². Then, another ocean-recycled Nylon fabric was applied to the second adhesive fiber layer, and passed through a hot pressing machine. The multi-layer structure was hot pressed at a hot pressing roll speed of about 1 m/min and a hot pressing temperature of about 150 °C, to obtain an electrospun composite membrane of Example 6.

The electrospun composite membrane of Example 6 was subjected to performance tests, including hydrostatic pressure, air permeability, water vapor permeability, peeling strength, water spray, and wash fastness tests. The results show that the electrospun composite membrane of Example 6 has a hydrostatic pressure tolerance of about 8,000 mm H₂O, an air permeability of about 1.4 CFM, a water vapor permeability of about 50,000 g/m²*24hr, a peeling strength of about 277 g/cm, and passes the water spray test (the weight difference before and after test with absorbent paper is about 0.2 g) and the wash fastness test (no peeling was observed after washing for 50 times).

### Example 7

In Example 7, an ocean-recycled Nylon fabric was fixed onto a conveying device, and driven by the conveying device to pass through a first electrospinning device having a voltage controlled to about 80 kV. The first electrospinning device sprayed an ethanol solution containing Nylon that was used as an adhesive (the concentration was about 20 wt%) toward the ocean-recycled Nylon fabric, to form a first adhesive fiber layer on the surface of the ocean-recycled Nylon fabric, which had an average fiber fineness of about 550 nm and a basis weight of about 7.7 g/M². The ocean-recycled Nylon fabric with the first adhesive fiber layer was then driven by the conveying device to pass through a second electrospinning device having a voltage controlled to about 80 kV. The second electrospinning device sprayed an ethanol solution containing bio-based Nylon that was used as a functional solution (the concentration was about 15 wt%) toward the first adhesive fiber layer, to form a first functional fiber layer on the surface of the first adhesive fiber layer, which had an average fiber fineness of about 261 nm, a basis weight of about 10 g/M², and an average pore size of about 0.78 µm. The ocean-recycled Nylon fabric with the first adhesive fiber layer and the first functional fiber layer was further driven by the conveying device to pass through and heated at a temperature of about 130 °C in a hot oven, and then pass through a third electrospinning device having a voltage controlled to about 80 kV. The third electrospinning device sprayed an ethanol solution containing bio-based Nylon that was used as an adhesive (the concentration was about 20 wt%) toward the first functional fiber layer, to form a second adhesive fiber layer on the surface of the ocean-recycled Nylon fabric, which had an average fiber fineness of about 526 nm and a basis weight of about 8.2 g/M². Then, another ocean-recycled Nylon fabric was applied to the second adhesive fiber layer, and passed through a hot pressing machine. The multi-layer structure was hot pressed at a hot pressing roll speed of about 0.5 m/min and a hot pressing temperature of about 150°C, to obtain an electrospun composite membrane of Example 7.

The electrospun composite membrane of Example 7 was subjected to performance tests, including hydrostatic pressure, air permeability, water vapor permeability, peeling strength, water spray, and wash fastness tests. The results show that the electrospun composite membrane of Example 7 has a hydrostatic pressure tolerance of about 9,000 mm H₂O, an air permeability of about 0.8 CFM, a water vapor permeability of about 20,000 g/m²*24hr, a peeling strength of about 276 g/cm, and passes the water spray test (the weight difference before and after test with absorbent paper is about 0.2 g) and the wash fastness test (no peeling was observed after washing for 50 times).

### Example 8

In Example 8, an ocean-recycled Nylon fabric was fixed onto a conveying device, and driven by the conveying device to pass through a first electrospinning device having a voltage controlled to about 120 kV. The first electrospinning device sprayed an ethanol solution containing Nylon that was used as an adhesive (the concentration was about 20 wt%) toward the ocean-recycled Nylon fabric, to form a first adhesive fiber layer on the surface of the ocean-recycled Nylon fabric, which had an average fiber fineness of about 700 nm and a basis weight of about 10 g/M². The ocean-recycled Nylon fabric with the first adhesive fiber layer was then driven by the conveying device to pass through a second electrospinning device having a voltage controlled to about 120 kV. The second electrospinning device sprayed an ethanol solution containing bio-based Nylon that was used as a functional solution (the concentration was about 15 wt%) toward the first adhesive fiber layer, to form a first functional fiber layer on the surface of the first adhesive fiber layer, which had an average fiber fineness of about 250 nm, a basis weight of about 20 g/M², and an average pore size of about 0.5 µm. The ocean-recycled Nylon fabric with the first adhesive fiber layer and the first functional fiber layer was further driven by the conveying device to pass through and heated at a temperature of about 150 °C in a hot oven, and then pass through a third electrospinning device having a voltage controlled to about 120 kV. The third electrospinning device sprayed an ethanol solution containing bio-based Nylon that was used as an adhesive (the concentration was about 20 wt%) toward the first functional fiber layer, to form a second adhesive fiber layer on the surface of the Nylon-Elastane plain woven fabric, which had an average fiber fineness of about 538 nm and a basis weight of about 10 g/M². Then, another ocean-recycled Nylon fabric was applied to the second adhesive fiber layer, and passed through a hot pressing machine. The multi-layer structure was hot pressed at a hot pressing roll speed of about 0.5 m/min and a hot pressing temperature of about 150°C, to obtain an electrospun composite membrane of Example 8.

The electrospun composite membrane of Example 8 was subjected to performance tests, including hydrostatic pressure, air permeability, water vapor permeability, peeling strength, water spray, and wash fastness tests. The results show that the electrospun composite membrane of Example 8 has a hydrostatic pressure tolerance of about 20,000 mm H₂O, an air permeability of about 0.3 CFM, a water vapor permeability of about 8,000 g/m²*24hr, a peeling strength of about 294 g/cm, and passes the water spray test (the weight difference before and after test with absorbent paper is about 0.2 g) and the wash fastness test (no peeling was observed after washing for 50 times).

### Example 9

In Example 9, a Nylon fabric was fixed onto a conveying device, and driven by the conveying device to pass through a first electrospinning device having a voltage controlled to about 80 kV. The first electrospinning device sprayed Nylon 6 that was used as an adhesive toward the Nylon fabric, to form a first adhesive fiber layer on the surface of the Nylon fabric, which had an average fiber fineness of about 213 nm and a basis weight of about 2.8 g/M². The Nylon fabric with the first adhesive fiber layer was then driven by the conveying device to pass through a second electrospinning device having a voltage controlled to about 90 kV. The second electrospinning device sprayed Nylon 6 that was used as a functional solution toward the first adhesive fiber layer, to form a first functional fiber layer on the surface of the first adhesive fiber layer, which had an average fiber fineness of about 216 nm, a basis weight of about 4 g/M², and an average pore size of about 0.8 µm. The Nylon fabric with the first adhesive fiber layer and the first functional fiber layer was further driven by the conveying device to pass through and heated at a temperature of about 200 °C in a hot oven, and then pass through a third electrospinning device having a voltage controlled to about 90 kV. The third electrospinning device sprayed Nylon 6 that was used as an adhesive toward the first functional fiber layer, to form a second adhesive fiber layer on the surface of the Nylon fabric, which had an average fiber fineness of about 200 nm and a basis weight of about 2.5 g/M². Then, another Nylon fabric was applied to the second adhesive fiber layer, and passed through a hot pressing machine. The multi-layer structure was hot pressed at a hot pressing roll speed of about 1 m/min and a hot pressing temperature of about 260°C, to obtain an electrospun composite membrane of Example 9.

The electrospun composite membrane of Example 9 was subjected to performance tests, including hydrostatic pressure, air permeability, water vapor permeability, peeling strength, water spray, and wash fastness tests. The results show that the electrospun composite membrane of Example 9 has a hydrostatic pressure tolerance of about 2,000 mm H₂O, an air permeability of about 8.2 CFM, a water vapor permeability of about 110,000 g/m²*24hr, a peeling strength of about 204 g/cm, and passes the water spray test (the weight difference before and after test with absorbent paper is about 0.1 g) and the wash fastness test (no peeling was observed after washing for 50 times).

### Example 10

In Example 10, an ocean-recycled Nylon fabric was fixed onto a conveying device, and driven by the conveying device to pass through a first electrospinning device having a voltage controlled to about 80kV. The first electrospinning device sprayed an ethanol solution containing Nylon that was used as an adhesive (the concentration was about 15 wt%) toward the ocean-recycled Nylon fabric, to form a first adhesive fiber layer on the surface of the ocean-recycled Nylon fabric, which had an average fiber fineness of about 355 nm and a basis weight of about 15 g/M². The ocean-recycled Nylon fabric with the first adhesive fiber layer was then driven by the conveying device to pass through a second electrospinning device having a voltage controlled to about 80 kV. The second electrospinning device sprayed an ethanol solution containing bio-based Nylon that was used as a functional solution (the concentration was about 7 wt%) toward the first adhesive fiber layer, to form a first functional fiber layer on the surface of the first adhesive fiber layer, which had an average fiber fineness of about 278 nm, a basis weight of about 11 g/M², and an average pore size of about 0.81 µm. The ocean-recycled Nylon fabric with the first adhesive fiber layer and the first functional fiber layer was further driven by the conveying device to pass through and heated at a temperature of about 120 °C in a hot oven, and then pass through a third electrospinning device having a voltage controlled to about 80 kV. The third electrospinning device sprayed an ethanol solution containing bio-based Nylon that was used as an adhesive (the concentration was about 15 wt%) toward the first functional fiber layer, to form a second adhesive fiber layer on the surface of the Nylon-Elastane plain woven fabric, which had an average fiber fineness of about 343 nm and a basis weight of about 15 g/M². Then, another ocean-recycled Nylon fabric was applied to the second adhesive fiber layer, and passed through a hot pressing machine. The multi-layer structure was hot pressed at a hot pressing roll speed of about 1 m/min and a hot pressing temperature of about 110°C, to obtain an electrospun composite membrane of Example 10.

The electrospun composite membrane of Example 10 was subjected to performance tests, including hydrostatic pressure, air permeability, water vapor permeability, peeling strength, water spray, and wash fastness tests. The results show that the electrospun composite membrane of Example 10 has a hydrostatic pressure tolerance of about 8,000 mm H₂O, an air permeability of about 1.0 CFM, a water vapor permeability of about 49,000 g/m²*24hr, a peeling strength of about 312 g/cm, and passes the water spray test (the weight difference before and after test with absorbent paper is about 0.2 g) and the wash fastness test (no peeling was observed after washing for 50 times).

The air permeability (>0.3CFM) of the electrospun composite membrane obtained by the method or system of the present disclosure is improved, because both the adhesive fiber layer and the functional fiber layer are formed by the electrostatic spinning technology. As a result, air is promote to pass through the electrospun composite membrane, to avoid the irritable feverish sensation and improve the wearing comfort. In contrast, the composite membranes currently commercially available cannot achieve such a high air permeability.

Additionally, the electrospun composite membrane obtained by the method or system of the present disclosure also has a high water vapor permeability (≧ 8,000g/m²*24hr), can quickly expel sweat and moisture to remain dry, and thus is especially suitable for high-intensity outdoor activities. Although both the adhesive fiber layer and the functional fiber layer have an average fiber fineness of several nanometers, the electrospun composite membrane still has a hydrostatic pressure tolerance of ≧ 10,000 mm H₂O, passes through the water spray test, and provides excellent water resistance to effectively block the infiltration of moderate to heavy rain, thus being suitable for use under extreme weather conditions.

The technical features and advantages of the present disclosure have been broadly outlined above, so that the present disclosure can be better understood. Those of ordinary knowledge in the technical field to which the present disclosure belongs should understand that the concepts and specific embodiments disclosed above can be used quite easily to modify or design other structures or processes to achieve the same purpose as that in the present disclosure. Those of ordinary knowledge in the technical field to which the present disclosure belongs should also understand that such equivalent structures and methods still fall within the spirit and scope of the present disclosure as defined in the appended claims.

## Claims

1. A method for preparing an electrospun composite membrane, comprising:
fixing a first base fabric to a conveying device;
driving the first base fabric by the conveying device to pass through a first electrospinning device, so as to form a first adhesive fiber layer on one surface of the first base fabric;
driving the first base fabric with the first adhesive fiber layer by the conveying device to pass through a second electrospinning device, so as to form a first functional fiber layer on the first adhesive fiber layer of the first base fabric; and
driving the first base fabric with the first adhesive fiber layer and the first functional fiber layer by the conveying device to pass through a hot pressing machine, so that the first base fabric with the first adhesive fiber layer and the first functional fiber layer is hot-pressed to form the electrospun composite membrane.

2. The method for preparing an electrospun composite membrane according to claim 1, before the first base fabric with the first adhesive fiber layer and the first functional fiber layer is passed through the hot pressing machine, the method further comprising:
driving the first base fabric with the first adhesive fiber layer and the first functional fiber layer by the conveying device to pass through a hot oven;
driving the first base fabric with the first adhesive fiber layer and the first functional fiber layer by the conveying device to pass through a third electrospinning device, so as to form a second adhesive fiber layer on the first functional fiber layer; and
applying a second base fabric to the second adhesive fiber layer, and passing through the hot pressing machine, to form the electrospun composite membrane.

3. The method for preparing an electrospun composite membrane according to claim 2, wherein a temperature in the hot oven is higher than a melting point of a material of the first adhesive fiber layer, and lower than a melting point of a material of the first functional fiber layer.

4. The method for preparing an electrospun composite membrane according to any one of claims 1 to 3, wherein a temperature in the hot pressing machine is higher than a melting point of a material of the first adhesive fiber layer, and lower than a melting point of a material of the first functional fiber layer.

5. The method for preparing an electrospun composite membrane according to any one of claims 2 to 4, wherein the first electrospinning device, the second electrospinning device, and the third electrospinning device are a needleless electrospinning device.

6. The method for preparing an electrospun composite membrane according to any one of claims 2 to 5, wherein an average fiber fineness of each of the first adhesive fiber layer and the second adhesive fiber layer is equal to or greater than an average fiber fineness of the first functional fiber layer; and a basis weight of each of the first adhesive fiber layer and the second adhesive fiber layer is equal to or less than a basis weight of the first functional fiber layer.

7. The method for preparing an electrospun composite membrane according to any one of claims 1 to 6, wherein the first functional fiber layer comprises one or more additives selected from a water repellent agent, an antibacterial agent, a deodorizer, a mite-repellent agent or a coloring agent.

8. The method for preparing an electrospun composite membrane according to any one of claims 1 to 7, wherein a hot pressing temperature in the hot pressing machine is about 80°C to about 300°C.

9. The method for preparing an electrospun composite membrane according to any one of claims 2 to 8, wherein each of the first adhesive fiber layer and the second adhesive fiber layer has an average fiber fineness of 200 nm to 700 nm and a basis weight of about 1 g/M² to 20 g/M²; and the first functional fiber layer has an average fiber fineness of 80 nm to 500 nm and a basis weight of 1 g/M² to 20 g/M².

10. The method for preparing an electrospun composite membrane according to any one of claims 1 to 9, wherein the first electrospinning device is operated with a power supply voltage from 50 kV to 120 kV; and the second electrospinning device is operated with a power supply voltage from 50 kV to 120 kV.

11. A system for preparing an electrospun composite membrane, comprising:
a conveying device, comprising an input end and an output end;
a first electrospinning device, arranged between the input end and the output end of the conveying device and comprising an adhesive accommodating component;
a second electrospinning device, arranged between the first electrospinning device and the output end of the conveying device and comprising a functional solution accommodating component; and
a hot pressing machine, arranged between the second electrospinning device and the output end of the conveying device.

12. The system for preparing an electrospun composite membrane according to claim 11, further comprising:
a hot oven, arranged between the second electrospinning device and the hot pressing machine;
a third electrospinning device, arranged between the hot oven and the hot pressing machine, and
a fabric input device, arranged between the third electrospinning device and the hot pressing machine.

13. The system for preparing an electrospun composite membrane according to claim 12, wherein a temperature in a hot oven is 60°C to 200°C.

14. The system for preparing an electrospun composite membrane according to any one of claims 11 to 13, wherein a hot pressing temperature in a hot pressing machine is 80°C to 300°C.

15. The system for preparing an electrospun composite membrane according to any one of claims 12 to 14, wherein the first electrospinning device, the second electrospinning device, and the third electrospinning device are a needleless electrospinning device.
